Europäisches Patentamt

European Patent Office

Office européen des brevets

(19)

(11) Veröffentlichungsnummer: **0 383 915**
**A1**

(12) **EUROPÄISCHE PATENTANMELDUNG**
veröffentlicht nach Art. 158 Abs. 3
EPÜ

(21) Anmeldenummer: 88909004.9

(22) Anmeldetag: 27.07.88

(86) Internationale Anmeldenummer:
PCT/SU88/00153

(87) Internationale Veröffentlichungsnummer:
WO 90/01127 (08.02.90 90/04)

(51) Int. Cl.5: **F16H 25/22**

(43) Veröffentlichungstag der Anmeldung:
**29.08.90 Patentblatt 90/35**

(84) Benannte Vertragsstaaten:
**AT DE FR GB IT**

(71) Anmelder: **POPOV, Nikolai Pavlovich**
**pr. Ispytatelei, 31-1-507**
**Leningrad, 197349(SU)**

Anmelder: **PLOTNIKOV, Andrei Dmitrievich**
**pr. Nastavnikov, 25-3-101**
**Leningrad, 195298(SU)**

Anmelder: **KLOTSVOG, Grigory Naumovich**
**ul. Gavanskaya 11-43**
**Leningrad, 199106(SU)**

(72) Erfinder: **POPOV, Nikolai Pavlovich**
**pr. Ispytatelei, 31-1-507**
**Leningrad, 197349(SU)**
Erfinder: **PLOTNIKOV, Andrei Dmitrievich**
**pr. Nastavnikov, 25-3-101**
**Leningrad, 195298(SU)**
Erfinder: **KLOTSVOG, Grigory Naumovich**
**ul. Gavanskaya 11-43**
**Leningrad, 199106(SU)**

(74) Vertreter: **Nix, Frank Arnold, Dr.**
**Kröckelbergstrasse 15**
**D-6200 Wiesbaden(DE)**

(54) **ELEKTRISCHER ANTRIEB MIT ZUSÄTZLICHEM HANDANTRIEB.**

(57) Der Elektroantrieb mit einem Reservehandantrieb enthält einen Elektromotor (1), ein Gehäuse (2), eine Hülse (6), eine Gangmutter (10), die exzentrisch zur Achse der Spindel 6 angeordnet ist, ein Zahnrad (12), das exzentrisch zur Achse der Spindel (6) angeordnet ist. Das Zahnrad (12) ist mit der Gangmutter (6) mit der Möglichkeit begrenzter gegenseitiger Bewegung verbunden und steht mit einer Zahnbüchse (13) im Eingriff. Die letztere ist konzentrisch zur Spindel (6) im Gehäuse (2) mit der Möglichkeit einer Drehung gegenüber diesem angeordnet, dabei ist die Innenfläche der Zahnbüchse als Bezugsfläche für die Spindel (6) ausgeführt. Der Elektroantrieb enthält ein Handrad (15) zur Handsteuerung, das mit

der Zahnbüchse (13) starr verbunden ist.

FIG.1

ELEKTROANTRIEB MIT RESERVEHANDANTRIEB

## Gebiet der Technik

Die Erfindung bezieht sich auf Vorrichtungen, die zur Steuerung von Stellmechanismen mit einer fortschreitenden Stangenbewegung dieser Mechanismen bestimmt sind und insbesondere auf Elektroantriebe mit einem Reservehandantrieb zur Steuerung von Rohrleitungsarmaturen. Am vorteilhaftesten kann die Erfindung in der chemischen, der erdölverarbeitenden Industrie, in der Gas-, Zellstoff- und Papierindustrie, in Kernkraftwerken, in der Eisen- und Nichteisenmetallurgie und in anderen Industriezweigen zum Einsatz kommen.

## Vorhergehender Stand der Technik

Elektroantriebe mit einem Reservehandantrieb sind durch Möglichkeit einer Einwirkung auf einen Stellmechanismus sowohl von einem Elektromotor als auch mit Hilfe einer Handsteuerung gekennzeichnet. Eine Handsteuerung ist erstens infolge Betriebsbedingungen beim Einrichten eines Rohrleitungssystems und zweitens dadurch erforderlich, daß Havariesituationen entstehen können, die mit einem Stromausfall bzw. mit Störungen im System zur elektrischen Steuerung im Zusammenhang stehen.

Bei der Schaffung der Elektroantriebe zur Steuerung von Rohrleitungsarmaturen wird eine große Aufmerksamkeit einer Verkleinerung der Außenabmessungen der Elektroantriebe geschenkt. Dies ist dadurch bedingt, daß die in besagten Elektroantrieben zum Einsatz kommenden Zahnradtriebe bei deren Funktion als Beanspruchung eine Kraft aufnehmen, die durch ein Kraftgetriebe entwickelt wird. Diese Aufnahme einer Kraftbeanspruchung durch einen Zahnradtrieb erfordert eine Vergrößerung der Abmessungen dieses Zahnradtriebs und folglich der Außenabmessungen des ganzen Elektroantriebs, die durch die Abmessungen des besagten Zahnradtriebs bestimmt werden.

Es ist ein Elektroantrieb mit einem Reservehandantrieb bekannt, enthaltend ein Gehäuse, eine darin angeordnete Welle und zwei im Eingriff stehende Gewindeelemente, von denen das eine gegen ein Durchdrehen gegenüber dem Gehäuse gesichert und koaxial zur Welle mit Möglichkeit einer axialen Bewegung angeordnet ist und das andere exzentrisch gegenüber dem ersten und lose auf der Welle mit Möglichkeit einer Drehbewegung gegenüber dieser angeordnet ist. Die Gesamtheit zweier Gewindeelemente stellt ein Schraubenumlaufgetriebe dar.

Beim Abrollen eines an der Welle lose angebrachten Gewindeelementes gegenüber dem unbeweglichen Gewindeelement kann ein Rutschen erfolgen, das im Falle stattfindet, wenn das Moment bzw. die Kraft eines Widerstandes das Moment bzw. die Kraft der Reibung in den sich berührenden Gewindeelementen überschreitet. Zur Verhütung des genannten Rutschens ist die Vorrichtung mit zwei ineinander eingreifenden Zahnrädern versehen, von denen das eine unbeweglich ist und das andere am exzentrisch angeordneten Gewindeelement mit Möglichkeit einer Wechselwirkung mit dem ersten Zahnrad angebracht ist. Dieses Zahnradpaar stellt ein Schraubenzahngetriebe dar. *

Ein Nachteil der beschriebenen Vorrichtung besteht in großen Außenabmessungen des Schraubenumlaufgetriebes, die dadurch bedingt sind, daß die ganze Beanspruchung der übertragenen Axialkraft durch das Schraubenumlaufgetriebe aufgenomen wird. Außerdem ist zur Gewährleistung separater Steuerung des Stellmechanismus vom Elektromotor und mit Hilfe einer Handsteuerung ein zusätzlicher Mechanismus erforderlich, der ein Getriebezugumschalten von der mechanischen auf die Handsteuerung und umgekehrt sicherstellt.

Es ist ein Elektroantrieb mit einem Reservehandantrieb bekannt, enthaltend einen Elektromotor, ein Gehäuse, eine im Gehäuse angeordnete Hülse, eine Spindel, eine Gangmutter, die im Inneren der Hülse exzentrisch gegenüber der Spindelachse angeordnet ist, ein Zahnrad, das exzentrisch zur Spindelachse angeordnet ist und im Eingriff mit einer Zahnbüchse liegt, die im Gehäuse konzentrisch zur Spindel mit Möglichkeit einer Drehbewegung gegenüber diesem angeordnet ist, sowie ein Handrad zum Handantrieb, das mit der Zahnbüchse starr verbunden ist (SU, A, 638779).

---

* SU, A, 992 868

In dieser Vorrichtung ist das Zahnrad auf der Gangmutter angebracht, dabei bilden die Spindel und die Gangmutter ein Schraubenumlaufgetriebe und das Zahnrad mit der Zahnbüchse einen Zahnradumlauftrieb. Die Zahnbüchse ist gegenüber dem Gehäuse mit Hilfe einer regelbaren Blockiereinrichtung festgehalten. Bei Überschreitung einer Axialkraft, auf welche die Blockiereinrichtung eingestellt worden ist, läßt diese die Zahnbüchse sich gegenüber dem Gehäuse durchdrehen, wodurch der Stellmechanismus vor Überlastung geschützt wird. Dabei wird der Elektroantrieb ausgeschaltet.

Ein Nachteil der beschriebenen Vorrichtung besteht darin, daß die besagte Blockiereinrichtung, mit deren Hilfe die Zahnbüchse gegenüber dem Gehäuse festgehalten wird, auf eine bestimmte Kraftbeanspruchung eingestellt wird, die man nur bei einer Einstellung der Vorrichtung ändern kann. Diese Kraft steht in keinem Zusammenhang mit der Axialbeanspruchung, die im Schraubenumlaufgetriebe beim Arbeiten des Antriebs entsteht und durch den Zahnradumlauftrieb infolge starrer Kupplung der beiden Getriebe voll aufgenommen wird. Folglich wird auch eine maximale Kraft, die im Schraubenumlaufgetriebe entsteht und auf welche der Elektroantrieb ausgelegt worden ist, durch den Zahnradumlauftrieb auch voll aufgenommen. Dies bedingt bedeutende Außenabmessungen des letzteren und folglich vergrößerte Abmessungen der ganzen Vorrichtung.

Außerdem ist zur Gewährleistung einer separaten Steuerung des Stellmechanismus vom Elektromotor bzw. von Hand in dieser Vorrichtung ebenfalls ein zusätzlicher Umschaltmechanismus erforderlich.

## Offenbarung der Erfindung

Der Erfindung liegt die Aufgabe zugrunde, einen Elektroantrieb mit einem Reservehandantrieb zu schaffen, bei dem die Gangmutter eines Schraubenumlaufgetriebes und das Zahnrad eines Zahnradumlauftriebs miteinander so gekuppelt sind, daß der Zahnradumlauftrieb von Beanspruchungen bei deren maximalen Anstieg auf der Endstufe der Funktion des Stellmechanismus, z.B. beim Verschlußabdichten einer Rohrleitungsarmatur, entlastet wird und dadurch die Abmessungen dieses
Zahnradumlauftriebs und folglich die Außenabmessungen der ganzen Vorrichtung verkleinert werden, sowie auf einen zusätzlichen Mechanismus zum Umschalten des Elektroantriebs von
der mechanischen auf die Handsteuerung verzichtet sein kann,
d.h. eine unabhängige Funktion der Vorrichtung von einem
Elektromotor und von Hand sichergestellt wird.

Diese Aufgabe wird bei einem Elektroantrieb mit einem
Reservehandantrieb, mit einem Elektromotor, einem Gehäuse,
einer im Gehäuse angeordneten Hülse, einer Spindel, einer
Gangmutter, die im Inneren der Hülse exzentrisch zur Spindelachse angeordnet ist, einem Zahnrad, das exzentrisch zur
Spindelachse angeordnet, mit der Gangmutter gekuppelt ist
im Eingriff mit einer Zahnbüchse liegt, die konzentrisch
zur Spindel im Gehäuse gegenüber diesem drehbar angeordnet
ist, und einem Handrad zur Handsteuerung, das mit der Zahnbüchse starr gekuppelt ist, erfindungsgemäß dadurch gelöst,
daß das genannte Zahnrad und die genannte Gangmutter miteinander mit Möglichkeit begrenzter Winkelverstellung gegeneinander gekuppelt sind und daß die Innenfläche der besagten
Zahnbüchse als Bezugsfläche* für die Spindel ausgeführt ist.

Die Kupplung des Zahnrads und der Gangmutter mit Möglichkeit begrenzter Winkelverstellung gegeneinander gewährleistet ein Durchdrehen des Zahnrads gegenüber der Gangmutter
bei einem maximalen Anstieg der Beanspruchungen im Schraubenumlaufgetriebe (Spindel-Gangmutter), wodurch ein Eingriff
zwischen dem Zahnrad und der Gangmutter und eine Kraftübertragung vom Schraubenumlaufgetriebe auf den Zahnradumlauftrieb unterbrochen werden. Auf diese Weise wird der Zahnradumlauftrieb von Beanspruchungen bei deren maximalem Anstieg
entlastet, wodurch man die Abmessungen dieses Zahnradumlauftriebs und folglich die Außenabmessungen der gesamten Vorrichtung verkleinern kann.

Da die Innenfläche der Zahnbüchse als Bezugsfläche für
die Spindel ausgeführt wird, wird beim Betrieb der Vorrichtung ein Reibungsmoment erreicht, das die Zahnbüchse im Ge-

---

* (Anm.d.Übers.: auch im Sinne von "Stützfläche")

häuse der Vorrichtung festhält. Dieses Moment ist bei der Nennbelastung größer als das Moment, das im Paar Spindel--Gangmutter, d.h. im Schraubenumlaufgetriebe entwickelt wird. Dank diesem Festhalten der Zahnbüchse im Gehäuse der Vorrichtung wird bei ihrer Abrollen durch das Zahnrad ein Eingriff des Zahnrads in die Gangmutter des Schraubenumlaufgetriebes, solange aufrechterhalten, bis ein in diesem Getriebe entwickelte Moment ein Reibungsmoment überschreitet, das die Zahnbüchse im Gehäuse der Vorrichtung festhält. Bei dieser Überschreitung wird sich das Zahnrad gegenüber der Gangmutter des Schraubenumlaufgetriebes durchdregen. Dadurch wird eine Verbindung zwischen dem Schraubenumlaufgetriebe und dem Zahnradumlauftrieb unterbrochen und der letztere von Beanspruchungen bei deren maximalem Anstieg entlastet. Dies ermöglicht, Abmessungen des Zahnradumlauftriebs und folglich Außenabmessungen der ganzen Vorrichtung zu verkleinern.

Es ist zweckmäßig, das Zahnrad und die Gangmutter miteinander mit Hilfe von Nocken zu verbinden, die an Stirnflächen des genannten Zahnrads und der genannten Gangmutter ausgeführt sind, wobei ein gesamter Winkel der zu kuppelnden Nocken kleiner als 360° sein soll.

Diese Ausführung der Verbindung zwischen dem Zahnrad und der Gangmutter ist eine konstruktiv einfachste und fertigungsgerechte Variante dieser Verbindung.

Es ist zweckmäßig, das Zahnrad und die Gangmutter in der Hülse mit Möglichkeit radialer Verstellung gegeneinander anzuordnen.

Eine mögliche radiale Bewegung des Zahnrads und der Gangmutter gegeneinander setzt eine Wahrscheinlichkeit zusätzlicher Überlastungen bedeutend herab, die beim Betrieb der Vorrichtung entstehen können, wodurch ein Verschleiß der Teile herabgesetzt und der Wirkungsgrad der Vorrichtung gesteigert wird.

Kurze Beschreibung der Zeichnungen

Die Erfindung wird anhand einer nachstehenden ausführlichen Beschreibung der erfindungsgemäßen Ausführung eines Elektroantriebs mit einem Reservehandantrieb unter Bezugnah-

- 6 -

me auf Zeichnungen näher erläutert. Es zeigt:

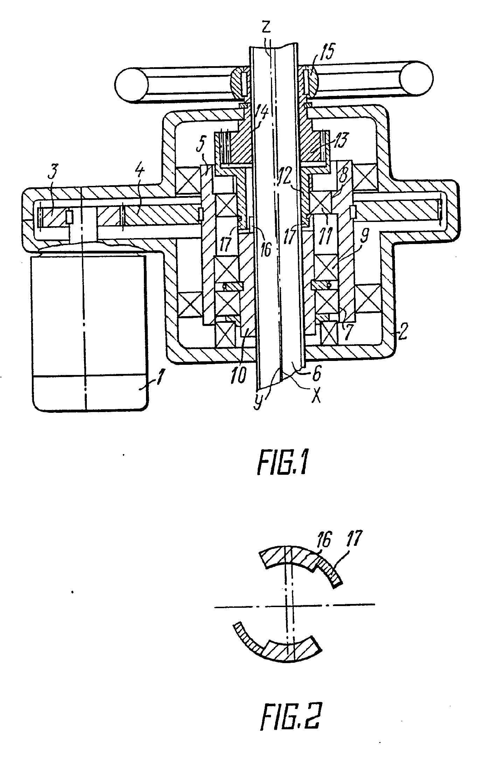

Fig.1 einen erfindungsgemäßen Elektroantrieb mit einem Reservehandantrieb im Schnitt und

Fig.2 den Querschnitt durch das Zahnrad und die Gangmutter an der Stelle ihrer Nockenverbindung.

Die beste Ausführungsvariante der Erfindung

Der Elektroantrieb mit einem Reservehandantrieb enthält einen Elektromotor 1, der am Gehäuse 2 angebracht ist. Mit Hilfe eines Zahnradtriebs 3 und 4 ist der Elektromotor 1 mit einer Hülse 5 gekuppelt. Im Gehäuse 2 ist eine Spindel 6 angeordnet, die vor Durchdrehen gesichert ist ( in Figuren sind keine Sicherungsmittel eingezeichnet, damit die Zeichnungen übersichtlich bleiben). In der Hülse 5 sind zylindrische Ausdrehungen 7 und 8 vorgesehen, die exzentrisch zur Achse X der Spindel 6 angeordnet sind. Die Exzentrizitäten der Ausdrehungen 7 und 8 mit den Achsen Y bzw. Z sind mit verschiedenen Beträgen ausgeführt.

In der Ausdrehung 7 der Hülse 5 ist mit Hilfe von Lagern 9 eine Gangmutter 10 angeordnet, die mit der Spindel 6 kinematisch gekuppelt ist und ein Schraubenumlaufgetriebe bildet.

In der Ausdrehung 8 der Hülse 5 ist mit Hilfe von Lagern 11 ein Zahnrad 12 angeordnet, das im Eingriff mit einer Zahnbüchse 13 liegt, die konzentrisch zur Spindel 6 angeordnet ist. Das Zahnrad 12 bildet zusammen mit der Zahnbüchse 13 einen Zahnradumlauftrieb.

Diese Anordnung der Gangmutter 10 und des Zahnrads 12 in den Ausdrehungen 7 bzw. 8 mit verschiedenen Exzentrizitätswerten ermöglicht eine radiale Bewegung der Gangmutter 10 und des Zahnrads 12 gegeneinander, wodurch die Wahrscheinlichkeit zusätzlicher Überlastungen beim Betrieb der Vorrichtung vermindert, der Verschleiß der Teile herabgesetzt und der Wirkungsgrad der Vorrichtung gesteigert wird.

Die Innenfläche 14 der Zahnbüchse 13 ist als Bezugsfläche für die Spindel 6 ausgeführt, die im Inneren der Zahnbüchse so angeordnet ist, daß beim Betrieb der Vorrichtung die Zahnbüchse 13 durch ein Reibungsmoment, das zwischen ihr und der Spindel 6 entsteht, im Gehäuse 2 der Vorrichtung festgehalten wird. Mit der Zahnbüchse 13 ist ein Handrad 15 zur Handsteuerung starr verbunden.

Die Gangmutter 10 des Schraubenumlaufgetriebes ist mit dem Zahnrad 12 des Zahnradumlauftriebs mit Möglichkeit ihrer Winkelbewegung gegeneinander gekuppelt. Diese Verbindung wird mit Hilfe von Nocken 16 die auf einer Stirnfläche der Gangmutter 10 ausgeführt sind, und von Nocken 17 hergestellt, die auf einer Gegenstirnfläche des Zahnrads 12 ausgeführt sind und in Eingriff mit den Nocken 16 kommen. Dabei ist der gesamte Winkel der zu kuppelnden Nocken 16 und 17 kleiner als 360°, wodurch ein Winkelspiel zwischen den Nocken 16 und 17 sichergestellt wird.

Der Elektroantrieb mit einem Reservehandantrieb funktioniert wie folgt.

Beim eingeschalteten Elektromotor 1 wird die Drehbewegung über den Zahnradtrieb 3 und 4 auf die Hülse 5 übertragen. Dabei rollt die Gangmutter 10, die in der Ausdrehung 7 der Hülse 5 in den Lagern 9 angeordnet ist, um die Spindel 6 infolge ihrer exzentrischen Anordnung gegenüber der Achse X der besagten Spindel 6 ab und führt gleichzeitig eine Drehbewegung um ihre Achse Y aus, die um den Betrag einer Exzentrizität gegenüber der Achse X der Spindel 6 versetzt ist. Die beiden Bewegungen der Gangmutter 10 bewirken eine fortschreitende Bewegung der Spindel 6. Das Übersetzungsverhältnis des Schraubenumlaufgetriebes, bestehend aus der Gangmutter 10 und der Spindel 6, wird aus dem Verhältnis bestimmt:

$$i_1 = \frac{D_m 10}{D_m 10 - D_m 6} = \frac{D_m 10}{2E}$$

wobei

$i_1$ Übersetzungsverhältnis des Schraubenumlaufgetriebes;

$D_m 10$ mittlerer Gewindedurchmesser der Gangmutter 10;

$D_m 6$ mittlerer Gewindedurchmesser der Spindel 6 und

$E$ Exzentrizität bedeuten.

Gleichzeitig mit Übertragung einer Drehbewegung von der Hülse 5 auf die Gangmutter 10 wird eine Drehbewegung von der Hülse 5 auf das Zahnrad 12 übertragen, das in der Ausdrehung 8 der Hülse 5 angeordnet ist. Dabei rollt das Zahnrad 12 um die Zahnbüchse 13 ab, die im Gehäuse 2 durch ein Reibungsmoment festgehalten wird, das beim Betrieb des Elektroantriebs entsteht. Dieses Festhalten wird dadurch sichergestellt, daß die Innenfläche der Zahnbüchse 13 als Bezugsfläche der Spindel 6 ausgeführt ist. Das Übersetzungsverhältnis des Zahnradumlauftriebs, bestehend aus dem Zahnrad 12 und der Zahnbüchse 13, wird aus dem Verhältnis bestimmt:

$$i_2 = \frac{Z_{12}}{Z_{12} - Z_{13}}$$

wobei $i_2$ Übersetzungsverhältnis des Zahnradumlauftriebs;

$Z_{12}$ Zähnezahl des Zahnrads 12 und

$Z_{13}$ Zähnezahl der Zahnbüchse 13 bedeuten.

Bei der fortschreitenden Bewegung der Spindel 6 unter einer Nennbelastung liegen die Nocken 16 der Gangmutter 10 und die Nocken 17 des Zahnrads 12 dann in Berührung, wenn das Übersetzungsverhältnis $i_2$ des Zahnradumlauftriebs größer ist als das Übersetzungsverhältnis $i_1$ des Schraubenumlaufgetriebs. Dabei ist die Abrollgeschwindigkeit des Zahnrads 12 des Zahnradumlauftriebs größer als die Abrollgeschwindigkeit der Gangmutter 10 des Schraubenumlaufgetriebes. Dies bewirkt eine gewisse Bremsung der Gangmutter 10, wodurch sie gegenüber der Spindel 6 rutscht. Dieses Rutschen übt keinen wesentlichen Einfluß auf eine Antriebsfunktion bei Nennbelastungen aus.

Bei Steigerung der Betriebsbeanspruchung bei einer Steuerung eines Stellmechanismus steigt im Schraubenumlaufgetriebe die Radialbeanspruchung an, unter deren Wirkung sich die Durchbiegung der Spindel 6 vergrößert, die Exzentrizität der Gangmutter 10 verkleinert, das Übersetzungsverhältnis des Schraubenumlaufgetriebes vergrößert und die Drehzahl der Gangmutter 10 nebst Nocken 16 um ihre Achse verkleinert werden (die Abrollgeschwindigkeit der Gangmutter 10 gegenüber der Spindel 6 bleibt unverändert). Die Abrollgeschwindigkeit des Zahnrads 12 nebst Nocken 17 gegenüber der Zahnbüchse bleibt ebenfalls unverändert.

Die Übersetzungsverhältnisse des Schraubenumlaufgetriebes und des Zahnradumlauftriebs gleichen sich aus, $i_1 = i_2$. Ein Rutschen der Gangmutter 10 gegenüber der Spindel 6 hört auf. Die Nocken 16 und 17 bleiben weiter im Eingriff.

Eine weitere Belastungssteigerung an der Spindel 6 bewirkt eine stärkere Spindeldurchbiegung, eine Vergrößerung des Übersetzungsverhältnisses des Schraubenumlaufgetriebes $i_1$ und eine entsprechende Verminderung der Drehzahl der Gangmutter 10 um ihre eigene Achse. Infolge dieser Drehzahlabnahme der Gangmutter 10 gehen ihre Nocken 16 aus dem Eingriff mit den Nocken 17 des Zahnrads 12, danach setzen die Nocken 16 und 17 ihre Bewegung mit verschiedenen Geschwindigkeiten im gleichen Drehsinn im Bereich des vorgesehenen Winkelspiels fort, bis die besagten Nocken mit ihren entgegengesetzten Flächen in Berührung kommen. Dann beginnen die Nocken 17 des Zahnrads 12 die Nocken 16 der Gangmutter 10 anzutreiben. Dabei stehen die Gangmutter 10 und die Spindel 6 wie ein gewöhnliches Schraubenpaar in Wechselwirkung, d.h. das Schraubenumlaufgetriebe beteiligt sich nicht an der Kraftübertragung an den Stellmechanismus. Die Leistung wird vom Elektromotor auf den Stellmechanismus über den Zahnradumlauftrieb übertragen.

Eine weitere Belastungssteigerung an der Spindel, z.B. am Anfang der Abdichtung eines Armaturverschlusses, bedingt eine Steigerung der Beanspruchung im Schraubenumlaufgetriebe. Sobald diese Beanspruchung den Reibungswert überschreitet, mit dem die Zahnbüchse 13 im Gehäuse 2 festgehalten wird, dreht sich die Zahnbüchse 13 zusammen mit dem Zahnrad 12 im Gehäuse 2 um einen Winkel durch, der nicht größer ist als ein Winkelspiel zwischen den Nocken 16, 17. Dieses Durchdrehen der Zahnbüchse 13 im Gehäuse 2 bewirkt ein Entkuppeln der Nocken 16 und 17 und eine Entlastung des Zahnradumlauftriebs. Dabei wird die Leistung des Elektromotors über die Gangmutter 10 auf die Spindel 6 übertragen, die jetzt schon als Schraubenumlaufgetriebe mit einem vergrößerten Übersetzungsverhältnis in Wechselwirkung stehen, das auf den Stellmechanismus eine gesteigerte Kraft überträgt. Dabei ist der Zahnradumlauftrieb vollkommen entlastet. Die weiteren Belastungssteigerungen an der Spindel bis zu maximalen Werten, für welche der Antrieb ausgelegt ist, werden mit einer mehrfachen Wiederholung der vorstehend beschriebenen Vorgänge begleitet, bis der Armaturverschluß vollkommen geschlossen wird.

Im Bereich der maximalen Kräfte, die auf den Stellmechanismus übertragen werden, wird also das beschriebene Entkuppeln und Kuppeln der Nocken 16 und 17 und folglich des Schraubenumlaufgetriebes und des Zahnradumlauftriebs von einer pulsierenden Art sein, was entspricht einer unbedeutenden Verdrehung des Handrads 15 zur Handsteuerung.

Der vorstehend beschriebene Mechanismus der Wechselwirkung des Schraubenumlaufgetriebes und des Zahnradumlauftriebs bedingt also deren Entkuppeln bei einem maximalen Kräfteanstieg am Stellmechanismus und eine Aufnahme dieser Beanspruchung nur durch das Schraubenumlaufgetriebe. Dies ermöglicht eine Ausführung des Zahnradumlauftriebs mit verkleinerten Abmessungen und folglich eine Verkleinerung der Außenabmessungen des ganzen Antriebs.

Wenn eine Handsteuerung des Stellmechanismus erforderlich ist, schaltet man den Elektromotor 1 aus, betätigt das Handrad 15 und dreht die damit gekuppelte Zahnbüchse 13 und das Zahnrad 12. Die im Eingriff miteiander stehenden Nocken 17 des Zahnrads 12 und die Nocken 16 der Gangmutter 10 bewirken ein Drehen der Gangmutter 10 um die Spindel 6, dabei macht die Gangmutter 10 keine Abrollbewegung um die Spindel 6 herum, weil die Hülse 5 unbeweglich bleibt, sondern steht mit der Spindel 6 wie ein gewöhnliches Schraubenpaar in Wechselwirkung, wodurch eine hohe Ausgangsgeschwindigkeit der Spindel 6 bedingt wird.

Bei einem spontanen Einschalten des Elektromotors 1 im Laufe einer Betätigung des Handrads 15 zur Handsteuerung entsteht keine Gefahr, weil zwischen den Elementen der mechanischen und der Handsteuerung keine feste kinematische Verbindung besteht.

## Industrielle Anwendbarkeit

Am vorteilhaftesten kann die Erfindung in der chemischen, der erdölverarbeitenden Industrie, in der Gas-, Zellstoff- und Papierindustrie, in Kernkraftwerken, in der Eisen- und Nichteisenmetallurgie und in anderen Industriezweigen zur Steuerung der Stellmechanismen der Rohrleitungsarmaturen mit einer fortschreitenden Bewegung der Stangen der besagten Mechanismen zum Einsatz kommen.

PATENTANSPRÜCHE :

1. Elektroantrieb mit einem Reservehandantrieb, mit einem Elektromotor, einem Gehäuse, einer im Gehäuse angeordneten Hülse, einer Spindel, einer Gangmutter, die im Inneren der Hülse exzentrisch zur Spindelachse angeordnet ist, einem Zahnrad, das exzentrisch zur Spindelachse angeordnet, mit der Gangmutter verbunden und mit einer Zahnbüchse gekuppelt ist, die konzentrisch zur Spindel angeordnet und im Gehäuse gegenüber diesem drehbar angeordnet ist, sowie einem Handrad zur Handsteuerung, das mit der Zahnbüchse starr verbunden ist, d a d u r c h  g e k e n n z e i c h n e t , daß das besagte Zahnrad und die besagte Gangmutter miteinander mit Möglichkeit begrenzter Winkelverstellung gegeneinander gekuppelt sind und daß die Innenfläche der besagten Zahnbüchse als Bezugsfläche für die Spindel ausgeführt ist.

2. Elektroantrieb nach Anspruch 1, d a d u r c h g e k e n n z e i c h n e t , daß das Zahnrad und die Gangmutter miteinander mit Hilfe von Nocken gekuppelt sind, die an Stirnflächen des Zahnrads und der Gangmutter ausgeführt sind, wobei der gesamte Winkel der zu kuppelnden Nocken weniger als $360°$ beträgt.

3. Elektroantrieb nach Anspruch 1, d a d u r c h g e k e n n z e i c h n e t , daß das Zahnrad und die Gangmutter in der Hülse mit Möglichkeit gegenseitiger Radialverstellung angeordnet sind.

FIG.1

FIG.2

# INTERNATIONAL SEARCH REPORT

International Application No PCT/SU 88/00153

## I. CLASSIFICATION OF SUBJECT MATTER (If several classification symbols apply, indicate all) [6]

According to International Patent Classification (IPC) or to both National Classification and IPC

Int.Cl[4]    F 16 H 25/22

## II. FIELDS SEARCHED

### Minimum Documentation Searched [7]

| Classification System | Classification Symbols |
|---|---|
| Int.Cl[4] | F 16 H 25/18, 25/20, 25/22, F 16 K 31/05 |

Documentation Searched other than Minimum Documentation
to the Extent that such Documents are Included in the Fields Searched [8]

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| A | SU, A1, 638779 (D.V. Bushenin et al.) 25 December 1978 (25.12.78), see the claims, figures | 1 |
| A | SU, A1, 992868 (A.D. Plotnikov et al.) 30 January 1983 (30.01.83), see the claims, figures | 1 |
| A | SU, A1. 991104 (M.I. Shevtsov et al.) 23 January 1983 (23.01.83), see the claims, figure 1 | 2 |

* Special categories of cited documents: [10]
"A" document defining the general state of the art which is not considered to be of particular relevance.
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention.
"X" document of particular relevance; the claimed invention cannot be considered novel or cannot be considered to involve an inventive step
"Y" document of particular relevance; the claimed invention cannot be considered to involve an inventive step when the document is combined with one or more other such documents, such combination being obvious to a person skilled in the art.
"&" document member of the same patent family

## IV. CERTIFICATION

| Date of the Actual Completion of the International Search | Date of Mailing of this International Search Report |
|---|---|
| 20 March 1989 (10.03.89) | 19 April 1989 (19.04.89) |
| International Searching Authority | Signature of Authorized Officer |
| ISA/SU | |

Form PCT/ISA/210 (second sheet) (January 1985)